(19) Europäisches Patentamt European Patent Office Office européen des brevets

(11) **EP 4 492 647 A1**

(12) **EUROPEAN PATENT APPLICATION**
published in accordance with Art. 153(4) EPC

(43) Date of publication:
**15.01.2025 Bulletin 2025/03**

(21) Application number: **22942959.2**

(22) Date of filing: **24.05.2022**

(51) International Patent Classification (IPC):
*H02K 7/02* *(2006.01)*

(52) Cooperative Patent Classification (CPC):
**H02K 7/02**

(86) International application number:
**PCT/JP2022/021287**

(87) International publication number:
**WO 2023/228285 (30.11.2023 Gazette 2023/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Nakada Create Corporation**
**Tokyo 165-0035 (JP)**

(72) Inventor: **NAKADA, Osamu**
**Tokyo 165-0035 (JP)**

(74) Representative: **Bandpay & Greuter**
**11 rue Christophe Colomb**
**75008 Paris (FR)**

(54) **FLYWHEEL DEVICE AND ROTARY ELECTRIC MACHINE**

(57)    A flywheel device including a support body, a rotation shaft, a pair of disk members spaced apart from each other and fixed on the rotation shaft, a pair of inner cylindrical members that are connected to outer circumferences of the disk members, respectively, and that are formed coaxially with the rotation shaft, and a pair of outer cylindrical members that are arranged to the support body so as to face outer circumferences of the inner cylindrical members, respectively, and that are provided away from the outer circumferences of the inner cylindrical members, wherein the disk members and the inner cylindrical members constitute a flywheel, the inner cylindrical members are formed by continuous inner magnets in a circumference direction, having magnetic poles on outer peripheral surfaces thereof, the outer cylindrical members having outer magnets that face the inner magnets with the same polarity facing each other and are continuously formed in the circumference direction, the rotation shaft is rotatably supported with respect to the support body in a non-contact manner due to repulsive force between the inner magnets and the outer magnets, and centers of widths of the inner magnets in an axis direction are offset from centers of widths of the outer magnets in the axis direction.

EP 4 492 647 A1

FIG.2

## Description

[Technical Field]

The present invention relates to a flywheel device and a rotating electric machine.

[Background Art]

Generally, a generator rotates a rotor inside a stator fixed to a support, thereby generating induced electromotive force to generate electric power. The rotational movement of the rotor is caused by torque resulting from, for example, hydraulic power, thermal power, atomic power, or an internal combustion engine such as a diesel engine.

In the meanwhile, when a bearing that supports the rotor is of a contact type, the rotational energy of the rotor will be lost due to friction. Therefore, in order to reduce the loss of energy, there has been proposed non-contact type bearings, such as hydrodynamic air bearings and magnetic bearings (refer to Patent Literature 1 and the like).

Especially, magnetic bearings using permanent magnets are effective in that the magnetic bearings can support rotation of the rotor without consuming electric power unnecessarily, compared with magnetic bearings using electromagnets.

In addition, the present applicant has proposed to use the inertia energy of a flywheel structure so that the rotational movement of the rotor is maintained for a longer time (refer to Patent Literature 2).

[Citation List]

[Patent Literature]

[PTL 1] Japanese Patent Laid-Open No. 11-325074
[PTL 2] Japanese Patent Laid-Open No. 2018-191507

[Summary of Invention]

[Technical Problem]

However, when magnets are made to face each other so that repulsion between the magnets increases, since magnetic flux lines have curves, the repulsion point becomes unstable and misalignment tends to occur in an axis direction (axial direction).

In view of these, an object of the present invention is to provide a flywheel device that effects stable rotation in which not only friction in a circumference direction (radial direction), but also friction in an axis direction (axial direction) movement are suppressed without being generated, and that maintains rotational energy for a longer time.

[Solution to Problem]

A flywheel device comprising:

a support body;
a rotation shaft;
a pair of disk members spaced apart from each other and fixed on the rotation shaft;
a pair of inner cylindrical members that are connected to outer circumferences of the disk members, respectively, and that are formed coaxially with the rotation shaft; and
a pair of outer cylindrical members that are arranged to the support body so as to face outer circumferences of the inner cylindrical members, respectively, and that are provided away from the outer circumferences of the inner cylindrical members,
wherein the disk members and the inner cylindrical members constitute a flywheel,
the inner cylindrical members are formed by continuous inner magnets in a circumference direction, having magnetic poles on outer peripheral surfaces thereof,
the outer cylindrical members having outer magnets that face the inner magnets with the same polarity facing each other and are continuously formed in the circumference direction,
the rotation shaft is rotatably supported with respect to the support body in a non-contact manner due to repulsive force between the inner magnets and the outer magnets, and
centers of widths of the inner magnets in an axis direction are offset from centers of widths of the outer magnets in the axis direction.

Additionally, another embodiment of the present invention relates to a rotating electric machine including the above-described flywheel device, a rotor fixed to the rotation shaft in middle of the pair of disk members, and a stator disposed on the support body.

[Advantageous Effects of Invention]

According to the present invention, a flywheel device can be provided that effects stable rotation in which not only friction in a circumference direction (radial direction), but also friction in an axis direction (axial direction) movement are suppressed without being generated, and that maintains rotational energy for a longer time.

[Brief Description of Drawings]

[Figure 1] Figure 1 is a front view of a flywheel device according to a first embodiment of the present invention.

[Figure 2] Figure 2 is a cross-sectional view of the flywheel device illustrated in Figure 1.

[Figure 3] Figure 3 is a partial cross-sectional view of a flywheel device according to a second embodiment of the present invention.

[Figure 4] Figure 4 is a front view of a modification of the flywheel device of the first embodiment of the present invention.

[Description of Embodiments]

Hereinafter, embodiments for implementing the present invention will be described with reference to the drawings.

(Flywheel Device)

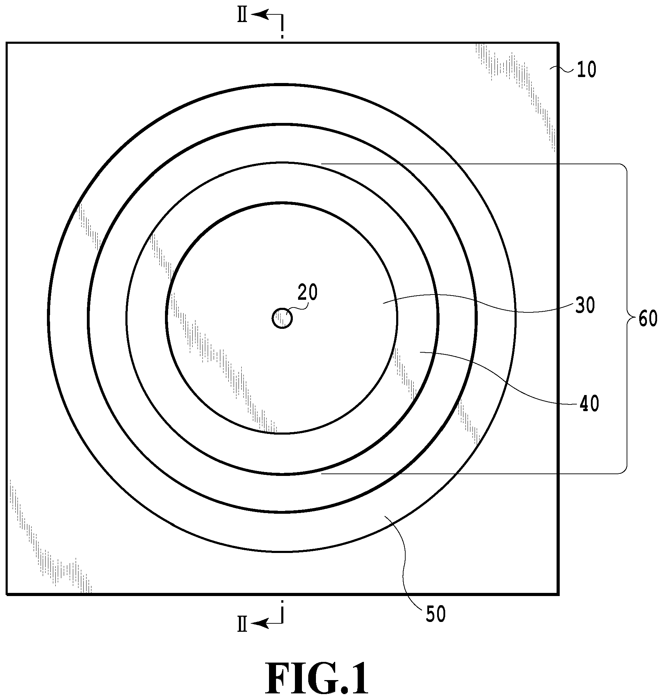

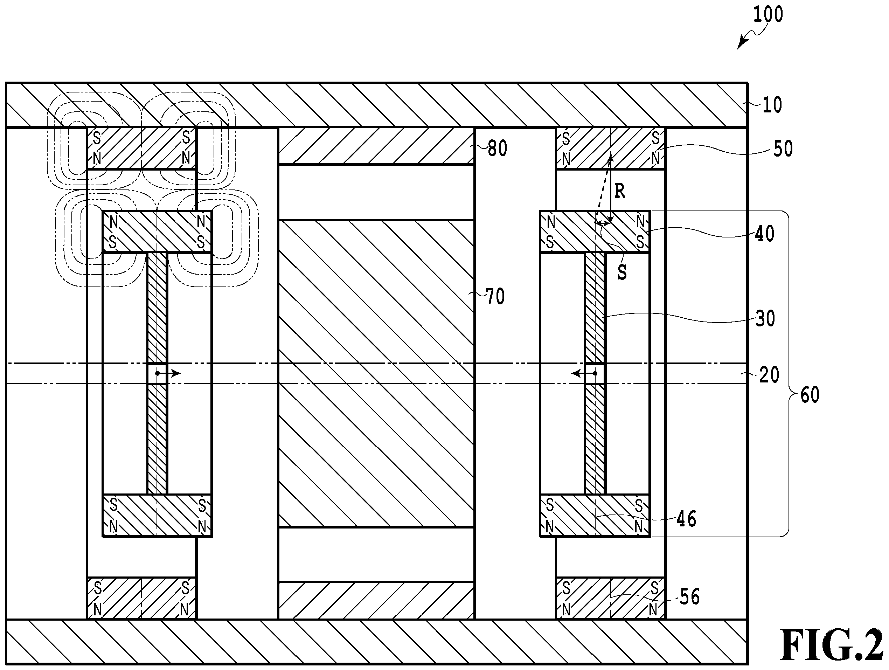

Figure 1 and Figure 2 are a front view and a cross-sectional view respectively for describing a flywheel device 100 according to a first embodiment. The flywheel device 100 includes a support body 10, a rotation shaft 20, a pair of disk members 30 spaced from each other and fixed on the rotation shaft 20, a pair of inner cylindrical members 40 that are connected to the outer circumferences of the disk members 30, respectively, and that are formed coaxially with the rotation shaft 20, and a pair of outer cylindrical members 50 that are arranged to the support body 10 so as to face the outer circumferences of the inner cylindrical members 40, respectively, and that are provided away from the outer circumferences of the inner cylindrical members 40. In the specification, a direction parallel to the rotation shaft 20 is referred to as an axis direction or an axial direction, and a direction perpendicular to the rotation shaft 20 and toward the circumference direction of the disk members 30 is referred to as a circumference direction or a radial direction. Further, a direction in which the pair of disk members 30 approach to each other toward a symmetry plane is referred to as "inward" in a thrust direction or an inner direction, and a direction in which the pair of disk members 30 move away from each other is referred to as "outward" in the thrust direction or an outer direction.

The support body 10 is a structure that is provided with the outer cylindrical member 50, which will be described later, and that supports the other members of the flywheel device 100 in a non-contact manner. The support body 10 may be further provided with a stator 80 of a rotating electric machine 300 as will be describe later.

The support body 10 may have any kind of shape and may be made of any kind of material, as long as the support body 10 has a strength capable of meeting the magnetic repulsive force applied to the outer cylindrical member 50. For example, soft magnetic materials such as iron, silicon steel, permalloy, and sendust, and non-magnetic materials such as carbon and wood can be used.

The rotation shaft 20 is a shaft that is provided with the pair of disk members 30 thereon with the rotation shaft 20 as the center, and that serves as a central axis of the rotation of the pair of disk members 30. The rotation shaft 20 is also provided with a rotor 70 of the rotating electric machine 300 as will be describe later, and the rotor 70 can be rotated with the rotation of the rotation shaft 20.

The disk members 30 are a pair of circular members that has the rotation shaft 20 as the center of their circles, and that are spaced apart and provided on the rotation shaft 20. The disk members 30 have a large area with respect to the cross-sectional area of the rotation shaft 20.

As will be described later, the disk members 30 are preferably lightweight, and preferably have a hollow structure. Additionally, the disk members 30 preferably has a smaller width in the axis direction compared with the inner cylindrical members 40.

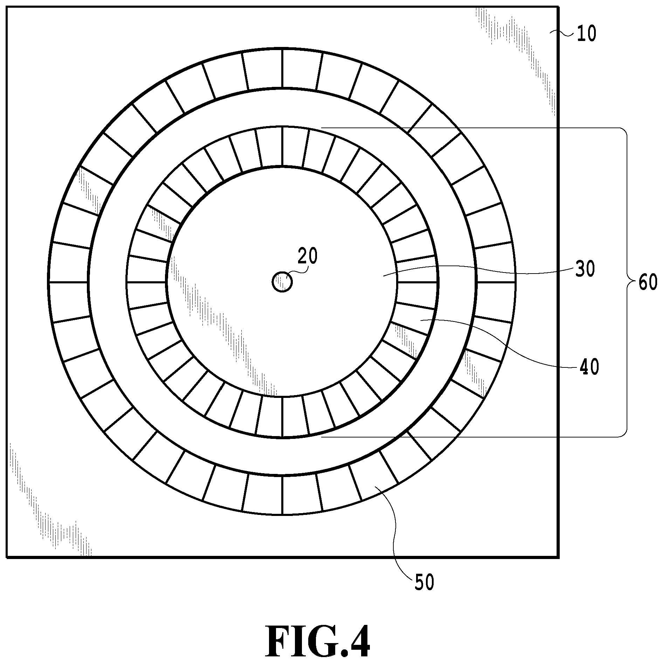

The inner cylindrical members 40 are members that are connected to the outer circumferences of the disk members 30, respectively, and that are formed coaxially with the rotation shaft 20. The inner cylindrical members 40 are formed by continuous inner magnets 45 in the circumferential direction, having magnetic poles on outer peripheral surfaces thereof. The inner magnets 45 preferably form a cylinder shape. The inner magnets 45 may be formed by an integral-type cylinder-shaped magnet (refer to Figure 1), or may be formed by arranging divided magnets in a cylinder shape so that the magnetic poles of the outer peripheral surfaces thereof become the same (refer to Figure 4).

The magnets used for the inner magnets 45 are preferably permanent magnets with strong magnetic force, and for example, rare earth magnets such as neodymium magnets and samarium cobalt magnets, ferritic magnets, and the like can be used.

The inner cylindrical members 40 constitute a flywheel 60 together with the disk members 30, and can maintain the rotational energy for a longer period due to the moment of inertia.

Here, a moment of inertia $J_d$ of a disk-shaped flywheel having a diameter D and a moment of inertia $J_c$ of a cylinder-shaped flywheel can be calculated as follows.

$$J_d = 1/2WD^2$$

$$J_c = 1/2W(D^2+d^2)$$

(Where, W is the weight of the flywheel, and d is the diameter of a hollow portion of the cylinder-shaped flywheel.)

In this manner, since the cylinder-shaped flywheel has larger moment of inertia, it is preferable that the mass of the inner cylindrical members 40 is larger, and the mass of the disk members 30 is more lightweight.

The outer cylindrical members 50 are arranged to the support body 10 so as to face the outer circumferences of the inner cylindrical members 40, respectively, and are provided away from the outer circumferences of the inner cylindrical members 40. In the outer cylindrical members 50, outer magnets 55 facing the inner magnets 45 with the same polarity facing each other are continuously formed in the circumference direction. The outer magnets 55 preferably form a cylinder shape. Similar to the inner magnets 45, the outer magnets 55 may be formed with an integral-type cylinder-shaped magnet (refer to Figure 1), or may be formed by arranging divided magnets in a cylinder shape so that the magnetic poles of the outer peripheral surfaces thereof become the same (refer to Figure 4).

Similar to the inner magnets 45, the magnets used for the outer magnets 55 are preferably permanent magnets with strong magnetic force, and for example, rare earth magnets such as neodymium magnets and samarium cobalt magnets, ferrite magnets, and the like can be used.

Due to the repulsive force between the inner magnets 45 and the outer magnets 55, the rotation shaft 20, and the inner cylindrical members 40 and the inner magnets 45 provided thereon are rotatably supported with respect to the support body 10 in a non-contact manner.

Additionally, in the flywheel device 100 of the present invention, centers 46 of the widths of the inner magnets 45 in the axis direction are offset from centers 56 of the widths of the outer magnet 55 in the axis direction, respectively. Preferably, each of the width centers 46 of the inner magnets 45 is offset from each of the width centers 56 of the outer magnet 55 inward in the thrust direction (in a mutually approaching direction in the axis direction), or outward in the thrust direction (in a direction away from each other).

The flywheel device 100 according to the first embodiment of the present invention illustrated in Figure 2 shows a structure in which each of the width centers 46 of the inner magnets 45 is offset from each of the width centers 56 of the outer magnets 55 inward in the thrust direction. In this case, radial repulsive force (an arrow R) and thrust repulsive force (an arrow S) are generated between the width centers 46 of the inner magnets 45 and the width centers 56 of the outer magnets 55. Therefore, the flywheel 60 is indirectly held by the outer magnets 55 inward in the thrust direction.

In this manner, in the flywheel device 100 according to the first embodiment of the present invention, the flywheel 60 can be maintained in a non-contact state both in the radial direction and the axial direction by the outer magnets 55. Thus the flywheel 60 can also have, in addition to the original function as a flywheel, a function of reducing friction that occurs at the time of rotation by floating and supporting the rotation shaft 20 including the rotor 70 with the magnetic repulsive force, as a magnetic bearing. That is, since the force acting on the bearing of one embodiment of the present invention is repulsive force, the rotation shaft 20 can be held at a position where magnetic forces are balanced, without requiring complicated control. In addition, in the present embodiment, since the flywheel function and the magnetic bearing functions are integrated, the size of the device can be reduced.

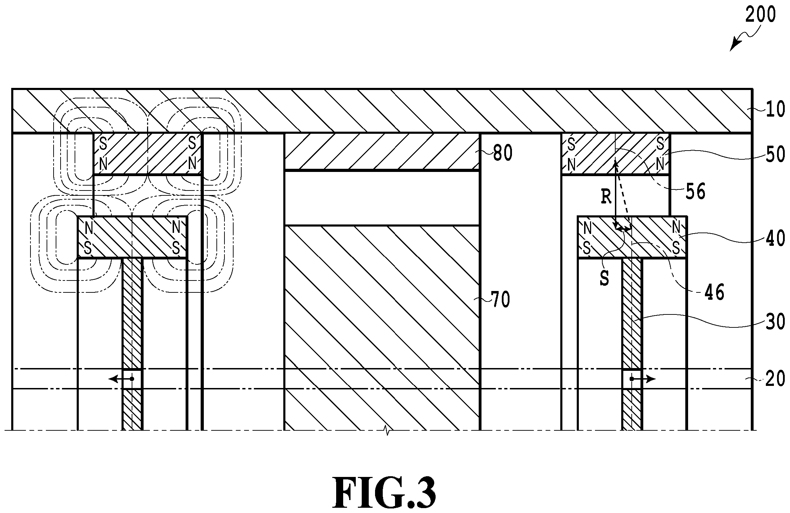

Figure 3 illustrates a flywheel device 200 according to a second embodiment of the present invention. The flywheel device 200 has a structure in which each of the width centers 46 of the inner magnets 45 is offset from each of the width centers 56 of the outer magnets 55 outward in the thrust direction. Also in this case, the radial repulsive force (the arrow R) and the thrust repulsive force (the arrow S) are generated between the width center 46 of the inner magnet 45 and the width center 56 of the outer magnet 55. Then, when one flywheel 60 tends to move outward in the thrust direction, the thrust repulsive force between the other flywheel 60 and the outer magnet 55 facing therewith increases, and movement in the thrust direction can also be suppressed.

In this manner, also in the flywheel device 200 of the second embodiment, the flywheel 60 can maintain a stable position in a non-contact state both in the radial direction and the axial direction by the outer magnets 55, can provide stable rotation without generating friction, and can maintain rotational energy for a longer time.

(Rotating Electric Machine)

A third embodiment of the present invention relates to a rotating electric machine 300 including the above-described flywheel device. The rotating electric machine 300 includes the above-described flywheel device 100 or 200 of the present invention, and has the rotor 70 fixed to the rotation shaft 20 and the stator 80 disposed on the support body 10 in the middle of the pair of disk members 30.

The rotating electric machine 300 can be used as a generator or a motor. In the rotating electric machine 300, a part of the rotor 70 may directly contact, or a terminal portion (not illustrated) electrically connected from the rotor 70 may contact an external terminal such as a brush.

Although various embodiments and modifications have been described above, the present invention is not limited to such contents. The numbers, shapes, and the like of various portions in the embodiments are illustration, and other arbitrary numbers and arbitrary shapes may be taken.

Additionally, each of the embodiments and modifications may be applied alone, or may be applied in combination. The other aspects that can be considered within the scope of the technical idea of the present invention are also encompassed in the scope of the present invention.

[Reference Signs List]

| | |
|---|---|
| 10 | Support body |
| 20 | Rotation shaft |
| 30 | Disk member |
| 40 | Inner cylindrical member |
| 45 | Inner magnet |
| 46 | Center of width of inner magnet in axial direction |
| 50 | Outer cylindrical member |
| 55 | Outer magnet |
| 56 | Center of width of outer magnet in axial direction |
| 60 | Flywheel |
| 70 | Rotor |
| 80 | Stator |
| 100 | Flywheel device |
| 200 | Flywheel device |
| 300 | Rotating electric machine |
| R | Radial repulsive force |
| S | Thrust repulsive force |

**Claims**

1. A flywheel device comprising:

   a support body;
   a rotation shaft;
   a pair of disk members spaced apart from each other and fixed on the rotation shaft;
   a pair of inner cylindrical members that are connected to outer circumferences of the disk members, respectively, and that are formed coaxially with the rotation shaft; and
   a pair of outer cylindrical members that are arranged to the support body so as to face outer circumferences of the inner cylindrical members, respectively, and that are provided away from the outer circumferences of the inner cylindrical members,
   wherein the disk members and the inner cylindrical members constitute a flywheel,
   the inner cylindrical members are formed by continuous inner magnets in a circumference direction, having magnetic poles on outer peripheral surfaces thereof,
   the outer cylindrical members having outer magnets that face the inner magnets with the same polarity facing each other and are continuously formed in the circumference direction,
   the rotation shaft is rotatably supported with respect to the support body in a non-contact manner due to repulsive force between the inner magnets and the outer magnets, and
   centers of widths of the inner magnets in an axis direction are offset from centers of widths of the outer magnets in the axis direction.

2. The flywheel device according to claim 1, wherein the inner magnets and the outer magnets are formed into cylindrical shapes.

3. The flywheel device according to claim 1 or 2, wherein widths of the inner cylindrical members in the axis direction are larger than thicknesses of the disk members in the axis direction, and are smaller than widths of the outer cylindrical members in the axis direction,

4. The flywheel device according to claim 1 or 2, wherein centers of widths of the inner magnets in the axis direction are offset from centers of widths of the outer magnets in the axis direction, respectively, by a same distance in an approaching direction.

5. The flywheel device according to claim 1 or 2, wherein centers of widths of the inner magnets in the axis direction are offset from centers of widths of the outer magnets in the axis direction, respectively, by a same distance in a separating direction.

6. A rotating electric machine, comprising:

   the flywheel device according to any one of claim 1 or 2;
   a rotor fixed to the rotation shaft in middle of the pair of the disk members; and
   a stator disposed to the support body.

**FIG.1**

**FIG.2**

EP 4 492 647 A1

**FIG.3**

EP 4 492 647 A1

**FIG.4**

## INTERNATIONAL SEARCH REPORT

| International application No. |
| --- |
| **PCT/JP2022/021287** |

### A. CLASSIFICATION OF SUBJECT MATTER

*H02K 7/02*(2006.01)i
FI: H02K7/02

According to International Patent Classification (IPC) or to both national classification and IPC

### B. FIELDS SEARCHED

Minimum documentation searched (classification system followed by classification symbols)

H02K7/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2018-191507 A (NAKADA CREATE CO LTD) 29 November 2018 (2018-11-29) paragraphs [0009]-[0026], fig. 1-3 | 1-6 |
| Y | JP 56-12831 A (NAKANO BUTSUSAN KK) 07 February 1981 (1981-02-07) p. 2, lower right column, line 15 to p. 3, upper left column, line 13, fig. 1 | 1-6 |
| A | JP 48-41136 A (MATSUSHITA ELECTRIC INDUSTRIAL CO., LTD.) 16 June 1973 (1973-06-16) | 1-6 |

☐ Further documents are listed in the continuation of Box C.    ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **01 August 2022** | **09 August 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/021287**

| Patent document cited in search report | | | Publication date (day/month/year) | Patent family member(s) | Publication date (day/month/year) |
|---|---|---|---|---|---|
| JP | 2018-191507 | A | 29 November 2018 | (Family: none) | |
| JP | 56-12831 | A | 07 February 1981 | (Family: none) | |
| JP | 48-41136 | A | 16 June 1973 | (Family: none) | |

Form PCT/ISA/210 (patent family annex) (January 2015)

**EP 4 492 647 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11325074 A
- JP 2018191507 A